# EUROPÄISCHE PATENTSCHRIFT

(11) **EP 4 524 603 B1**
(45) Veröffentlichungstag und Bekanntmachung des Hinweises auf die Patenterteilung: **08.07.2026**
(21) Anmeldenummer: 23196947.8
(22) Anmeldetag: 12.09.2023
(51) Int. Cl.: G01S 7/03, H01Q 21/22, H01Q 21/06, H01Q 19/06, H01Q 1/52, H01Q 1/32, G01S 13/931, H01Q 15/08

(54) **RADARSENSOR ZUR ABSTANDSBESTIMMUNG**
RADAR SENSOR FOR DETERMINING DISTANCE
CAPTEUR RADAR POUR LA DÉTERMINATION DE DISTANCE

(43) Veröffentlichungstag der Anmeldung: 19.03.2025
(73) Patentinhaber: Baumer Electric AG, 8500 Frauenfeld (CH)
(72) Erfinder: Mauch, Rainer, 78247 Hilzingen (DE); Zint, Sören, 88090 Immenstaad (DE); Illi, Fabian, 8309 Birchwil (CH); Huber, Felix, 78166 Donaueschingen (DE)
(74) Vertreter: Strauss, Steffen

(56) Entgegenhaltungen:
- WO-A1-2013/055272
- DE-A1- 102007 036 262
- DE-A1- 102020 209 564
- US-A1- 2022 260 674

## Beschreibung

Die vorliegende Erfindung betrifft einen Radarsensor zur Abstandsbestimmung eines Objekts nach dem Oberbegriff des Anspruchs 1.

Radarsensoren zur Abstandsbestimmung eines Objekts innerhalb eines Erfassungsbereichs, der sich in einem Bereich von dem Radarsensor erstreckt, sind aus dem Stand der Technik allgemein bekannt.

Beispielsweise beschreibt die EP 3 534 173 B1 der Anmelderin eine Gehäuseanordnung eines solchen Radarsensors, der bereits erfolgreich vermarktet wird.

Dieser gattungsbildende Radarsensor umfasst ein Sendemodul mit einer Antenne, die aus einem Patch-Array gebildet ist, um Radarstrahlung mit einer ersten Richtcharakteristik zu erzeugen sowie ein Empfangsmodul, das für ein zeitgleiches Empfangen reflektierter Radarstrahlung auch eine Patch-Array-Antenne umfasst. Zur Verbesserung des Antennengewinns und der Richtwirkung umfasst der bekannte Radarsensor noch Linsenmittel, die durch eine vom Sende- und Empfangsmodul gemeinsam genutzte Sammellinse ausgebildet sind.

Für bestimmte Anwendungen ist es allerdings von Vorteil, wenn der Mindestabstand, bei dem die zuverlässige Erfassung von Objekten möglich ist, verkleinert werden könnte.

Radarsensoren umfassen einen Blindbereich auf, der sich zwischen dem Radarsensor und dem zu erfassenden Objekt erstreckt. Befindet sich ein Objekt innerhalb des Blindbereichs, d. h. der Mindestabstand zwischen dem Radarsensor und dem zu erfassenden Objekt wird nicht eingehalten, ist die zuverlässige Erfassung des Objekts nicht möglich.

Der Blindbereich eines Radarsensors wird im Wesentlichen durch zwei Effekte bestimmt: Zum einen kommt es zu einem Übersprechen der ausgesendeten Radarstrahlung an der Innenfläche der Linsenmittel, was zu nachteiligen Reflexionen führt, die dann auf das Empfangsmodul treffen und das Signal zu Rauschverhältnis negativ beeinflussen. Zum anderen muss die Empfangsleistung der reflektierten und vom Empfangsmodul erfassten Radarstrahlung ausreichend groß sein, was nur bei einer geeigneten Überlagerung der Senderichtcharakteristik der ausgesendeten Radarstrahlung und der Empfangsrichtcharakteristik der reflektierten und/oder empfangenen Radarstrahlung gegeben ist.

Zudem führt die Realisierung der Linsenmittel durch eine einzelne Sammellinse zu einem Schielen, was durch den Querversatz zwischen der jeweiligen Patch-Array-Antenne und dem Scheitelpunkt der einzelnen Radarlinse hervorgerufen wird, was sich nachteilig auf Nahbereichsradarsensoren und andere Entfernung auswirkt.

Aus der US 2022/260674 A1 ist ein Radarsensor mit einem Sendemodul mit senderseitiger Patch-Array-Antenne und einem Empfangsmodul mit empfangsseitiger Patch-Array-Antenne bekannt. Der Radarsensor umfasst eine spezielle Isolation, die dafür sorgt, dass es keine Störungen zwischen der Empfangs- und der Sendeantenne gibt.

Die WO 2013/055272A1 offenbart einen Radarsensor zur Kurzstreckenerfassung mit einem Sendemodul mit einer senderseitigen Patch-Array-Antenne und einem Empfangsmodul mit empfangsseitiger Patch-Array-Antenne. Die beiden Antennen sind jeweils von einem Metallrahmen umgeben, um die direkte Rückkopplung von Radarstrahlung zwischen beiden Antennen zu reduzieren.

Die DE 10 2020 209 564 A1 offenbart einen Radarsensor mit einem Sende- und Empfangsmodul sowie einem radaroptischen Element, um die Radarstrahlung beim Durchgang möglichst stark aufzuweiten.

Der aus der DE 10 2007 036 262 A1 bekannte Radarsensor für ein Fahrzeug umfasst eine senderseitige Patch-Array-Antenne in Form eines einzelnen Antennen-Zweiges mit mehreren seriell verschalteten Patches, um im Azimut gebündelte Radarstrahlung zu erzeugen. Der Radarsensor umfasst ferner eine empfangsseitige Patch-Array-Antenne, die durch einen Antennen-Zweig aus mehreren, seriell verschalteten Antennenelementen ausgebildet ist. Des Weiteren sind Linsenmittel in Form von einer einzelnen oder zwei sende- und empfangsseitig getrennten Zylinderlinsen offenbart. Somit wird erzielt, dass die Radarstrahlung in Azimut unabhängig von der Radarstrahlung in Elevation formbar ist.

Aufgabe der vorliegenden Erfindung ist es die aus dem Stand der Technik bekannten Nachteile zu überwinden. Insbesondere ist es die Aufgabe der vorliegenden Erfindung einen Radarsensor mit kleinem Blindbereich anzugeben, um Objekte mit geringem Abstand innerhalb eines Erfassungsbereichs zuverlässig zu erkennen.

Diese Aufgabe wird durch einen erfindungsgemäßen Radarsensor gemäß dem Anspruch 1 gelöst.

Der erfindungsgemäße Radarsensor ist zur Abstandsbestimmung von Objekten in einem Erfassungsbereich eingerichtet.

Bevorzugt basiert der Radarsensor auf der frequenzmodulierten Dauerstrichmethode (FMCW - Frequency Modulated Continuous Wave). Besonders bevorzugt dient hierbei die ausgesendete Radarstrahlung als ein Trägersignal, dessen Frequenz in einem festgelegten Bereich variiert wird. Zeitgleich ist der Radarsensor zum Erfassen reflektierter Radarstrahlung eingerichtet, wobei durch eine Auswertung der reflektierten Strahlung in Bezug auf das ursprüngliche Trägersignal der Abstand und/oder die Geschwindigkeit der Objekte, die sich innerhalb des Erfassungsbereichs befinden, ermittelt werden.

Ganz besonders bevorzugt ist der Radarsensor als ein Nahbereichsradarsensor, insbesondere mit einem Blindbereich kleiner als 80mm, ausgebildet.

Der erfindungsgemäße Radarsensor umfasst ein Sendemodul, das eine senderseitige Patch-Array-Antenne mit einer ersten Richtcharakteristik aufweist. Das Sendemodul ist ausgebildet und/oder eingerichtet, Radarstrahlung mit der ersten Richtcharakteristik auszusenden.

Die Radarstrahlung mit der ersten Richtcharakteristik umfasst in einer Schnittebene, die quer und/oder rechtwinklig zur Ausbreitungsrichtung der ausgesendeten Radarstrahlung ausgerichtet ist, eine Längenerstreckung Ly und eine hierzu orthogonal und/oder rechtwinklig verlaufende Breitenerstreckung Bx, wobei die Längenerstreckung Ly kleiner als die Breitenerstreckung Bx ist.

Anders ausgedrückt, die Radarstrahlung mit der ersten Richtcharakteristik umfasst eine längliche und/oder ovale und/oder unsymmetrische Hauptkeule.

Zudem umfasst der erfindungsgemäße Radarsensor ein Empfangsmodul, das eine empfangsseitige Patch-Array-Antenne mit einer ersten Richtcharakteristik aufweist. Das Empfangsmodul ist ausgebildet und/oder eingerichtet, Radarstrahlung, die insbesondere im Erfassungsbereich der Sensoreinheit reflektiert wurde, zu erfassen. Auch die empfangsseitige Patch-Array-Antenne umfasst eine erste Richtcharakteristik und ist somit dazu ausgebildet und/oder eingerichtet, die Radarstrahlung mit der ersten Richtcharakteristik zu erfassen.

Ferner umfasst der erfindungsgemäße Radarsensor Linsenmittel, die so relativ zum Sende- und Empfangsmodul positioniert und/oder angeordnet sind, dass die ausgesendete und reflektierte Radarstrahlung im Wesentlichen vollständig auf die Linsenmittel treffen. Ferner ist es erfindungsgemäß vorgesehen, dass die Linsenmittel durch eine erste Linse für die ausgesendete Radarstrahlung und durch eine zweite Linse für die im Erfassungsbereich reflektierte Radarstrahlung ausgebildet sind. Die erste und die zweite Linse sind hinsichtlich der Längenerstreckung Ly der erzeugten Radarstrahlung unmittelbar benachbart. Anders ausgedrückt, die erste und die zweite Linse sind in Draufsicht in Richtung der Längenerstreckung Ly im Wesentlichen unmittelbar nebeneinander positioniert und/oder in einer gemeinsamen Ebene und/oder zueinander angrenzend angeordnet.

Im Wesentlich unmittelbar benachbart bedeutet im Rahmen der vorliegenden Erfindung, dass die erste Linse und die zweite Linse, die bevorzugt jeweils als eine eigenständige Sammellinse ausgebildet sind, jeweils vollständig ausgebildet sind und unmittelbar ineinander übergehen.

Bevorzugt ist in diesem Zusammenhang das Anordnen der ersten Linse neben der zweiten Linse über eine Trägereinheit und/oder eine Gehäuseanordnung vorgesehen. Vorteilhaft kann somit die Relativposition zwischen dem Sendemodul und dem Empfangsmodul einerseits und der ersten Linse und der zweiten Linse andererseits festgelegt werden. Gleichzeitig kann somit auch die Lage der ersten Linse relativ zur zweiten Linse festgelegt werden.

Die erste und die zweite Linse sind bevorzugt einstückig und/oder monolithisch ausgebildet. Vorteilhaft kann eine solche Linseneinheit einfacher relativ zum Sende- und Empfangsmodul positioniert werden.

Ein erster wesentlicher Aspekt der vorliegenden Erfindung ist, dass die senderseitige und die empfangsseitige Patch-Array-Antenne zum Erzeugen und Erfassen von Radarstrahlung mit der ersten Richtcharakteristik ausgebildet sind.

Radarstrahlung mit der ersten Richtcharakteristik umfasst eine unsymmetrische und/oder längliche Richtcharakteristik, wobei die Längenerstreckung Ly kleiner als die Breitenerstreckung Bx ist. In diesem Zusammenhang wird darauf hingewiesen, dass die Längenerstreckung Ly der ausgesendeten Radarstrahlung und die Längenerstreckung Ly der reflektierten Radarstrahlung entlang einer gemeinsamen Richtung ausgerichtet sind.

Ein weiterer Aspekt der vorliegenden Erfindung ist ferner, dass die erste und die zweite Linse in Richtung der Längenerstreckung Ly unmittelbar benachbart sind. Erfindungsgemäß vorteilhaft kann somit zunächst das Übersprechen der ausgesendeten Radarstrahlung auf das Empfangsmodul durch eine Reflexion an der Innenseite der ersten und/oder der zweiten Linse minimiert werden.

Weiterhin ist es im Rahmen der vorliegenden Erfindung geplant, dass die erste und die zweite Linse so ausgebildet sind, dass das Verhältnis zwischen der Längenerstreckung Ly und der Breitenerstreckung Bx der ersten oder einer zweiten Richtcharakteristik der Radarstrahlung beeinflussbar ist, derart, dass die Radarstrahlung mit der ersten Richtcharakteristik und somit mit der Längenerstreckung Ly, die kleiner als die Breitenerstreckung Bx ausfällt, in Radarstrahlung mit der zweiten Richtcharakteristik und somit mit einer Längenerstreckung Ly, die größer als die Breitenerstreckung Bx ausfällt, und/oder dass die Radarstrahlung mit der zweiten Richtcharakteristik und somit mit der Längenerstreckung Ly, die größer als die Breitenerstreckung Bx ist, in Radarstrahlung mit der ersten Richtcharakteristik und somit mit einer Längenerstreckung Ly, die kleiner als die Breitenerstreckung Bx ausfällt, umformbar ist.

Anders ausgedrückt, die Patch-Array-Antenne des Sendemoduls und die Patch-Array-Antenne des Empfangsmoduls sind so ausgebildet, dass Radarstrahlung mit einer ersten Richtcharakteristik aussendbar und/oder empfangbar ist.

Radarstrahlung mit der ersten Richtcharakteristik umfasst in einer vom Sende- und/oder Empfangsmodul beabstandeten Schnittebene eine Richtcharakteristik und/oder eine Hauptkeule, die hinsichtlich einer ersten Längenerstreckung und einer ersten Breitenerstreckung unsymmetrisch und/oder oval ausgebildet ist, wobei die erste Längenerstreckung kleiner als die erste Breitenerstreckung ausfällt.

Radarstrahlung mit der zweiten Richtcharakteristik, die von der ersten und/oder zweiten Linse beim Auftreffen von Radarstrahlung mit der ersten Richtcharakteristik erzeugt wird, umfasst in einer vom Sende- und/oder Empfangsmodul beabstandeten Schnittebene eine Richtcharakteristik und/oder eine Hauptkeule, die hinsichtlich einer zweiten Längenerstreckung und einer zweiten Breitenerstreckung auch unsymmetrisch und/oder oval ausgebildet ist, wobei die zweite Längenerstreckung größer als die zweite Breitenerstreckung ausfällt.

Erfindungsgemäß vorteilhaft können durch die Radarstrahlung mit der zweiten Richtcharakteristik Objekte im Erfassungsbereich unter einem kleinen und/oder geringen Mindestabstand erfasst werden, da durch die größere, insbesondere zweite, Längenerstreckung für einen definierten Abstand ein größerer überlappender Bereich im Vergleich zur kleineren, insbesondere ersten, Längenerstreckung zwischen der ausgesendeten und reflektierten Radarstrahlung erzielt wird. Anders ausgedrückt, im Ergebnis kann durch den erfindungsgemäßen Radarsensoren der Mindestabstand reduziert werden.

Erfindungsgemäß ist es vorgesehen, dass die senderseitige und/oder empfangsseitige Patch-Array-Antenne jeweils wenigstens zwei Zweige mit jeweils wenigstens drei, seriell und/oder in Reihe verschalteten Patches umfasst, wobei in Draufsicht die wenigstens zwei Zweige der jeweiligen Patch-Array-Antenne, die insbesondere in einer gemeinsamen Antennenebene verlaufen und/oder ausgerichtet sind, parallel und/oder spiegelsymmetrisch entlang einer ersten Spiegelachse S1 ausgerichtet sind, die in Draufsicht entlang der Richtung der Längenerstreckung verläuft.

Vorteilhaft ermöglicht eine solche Ausgestaltung der jeweiligen Patch-Array-Antenne die negativen Auswirkungen auf das Empfangsmodul, insbesondere aufgrund von Übersprechen, zusätzlich zu minimieren.

Bei einer bevorzugten Weiterbildung sind das Sendemodul und das Empfangsmodul so relativ zueinander angeordnet, dass die wenigstens zwei Zweige des Sendemoduls zu den wenigstens zwei Zweigen des Empfangsmoduls in Draufsicht spiegelsymmetrisch zu einer in Richtung der Breitenerstreckung Bx verlaufenden zweiten Spiegelachse S2 ausgerichtet sind, wobei die erste Spiegelachse S1 und die zweite Spiegelachse S2 zueinander orthogonal verlaufen.

Durch eine solche Ausgestaltung des Sende- und des Empfangsmoduls kann das Übersprechen und andere negative Wechselwirkungen zwischen Sende- und Empfangsmodul zusätzlich verringert werden und somit ein Radarsensor mit möglichst kleinem Blindbereich bereitgestellt werden.

Ferner ist es bevorzugt vorgesehen, dass die Anzahl der Patches eines der wenigstens zwei Zweige des Sendemoduls und/oder die Anzahl der Patches eines der wenigstens zwei Zweige des Empfangsmoduls die Anzahl der Zweige der jeweiligen Patch-Array-Antenne um eine Mengeneinheit von wenigstens 1 übersteigt, um die Radarstrahlung mit der ersten Richtcharakteristik zu erzeugen.

Weiterbildend ist es bevorzugt geplant, dass die Anzahl der Patches pro Zweig des Sende- und/oder Empfangsmoduls ungerade und/oder die Anzahl der Zweige pro Sende- und/oder Empfangsmodul gerade gewählt ist.

Bei einer bevorzugten Weiterbildung des erfindungsgemäßen Radarsensors sind die wenigstens zwei Zweige des Sendemoduls und/oder die wenigstens zwei Zweige des Empfangsmoduls jeweils als ein Series-Fed Array ausgebildet.

Zudem ist es bei einer bevorzugten Ausführungsvariante geplant, dass die wenigstens zwei Zweige jeweils endseitig wenigstens ein, bevorzugt genau ein, getapertes Patch umfassen, um den Ausleuchtungswinkel, insbesondere die Abstrahlungsform hinsichtlich der Längenerstreckung Ly erfindungsgemäß anzupassen.

Ferner ist es in diesem Zusammenhang weiterbildend geplant, dass das getaperte Patch in Bezug auf ein ungetapertes Patch in Draufsicht in Richtung der Breitenerstreckung eine Patchbreite von weniger als 90%, bevorzugt weniger als 80%, besonders bevorzugt weniger als 70%, ganz besonders bevorzugt weniger als 60%, umfasst.

Vorteilhaft kann die Richtcharakteristik der erzeugten Radarstrahlung zusätzlich optimiert werden.

Weiterbildend ist es vorgesehen, dass das Sendemodul, insbesondere das Sende- und das Empfangsmodul, einen Leistungsteiler umfasst, wobei der Leistungsteiler symmetrisch ausgebildet ist, derart, dass die Leistung zwischen den einzelnen Zweigen des Sendemoduls, insbesondere des Sende- und des Empfangsmoduls, gleichmäßig und/oder symmetrisch aufteilbar ist.

Ferner ist der Leistungsteiler bevorzugt stufenförmig ausgebildet, wobei es in jeder Stufe zu einer Leistungshalbierung kommt.

Bei einer bevorzugten Ausführungsvariante des erfindungsgemäßen Radarsensors ist geplant, dass die erste und/oder die zweite Linse einen Durchmesser von weniger als 60mm, bevorzugt weniger als 40mm, besonders bevorzugt weniger als 30mm, ganz besonders bevorzugt weniger als 22mm aufweist.

Zusätzlich oder alternativ ist es weiterbildend vorgesehen, dass die erste Linse und/oder die zweite Linse aus einem dielektrischen Material ausgebildet ist und/oder ein solches Material zumindest umfasst.

Zudem ist es weiterbildend und/oder alternativ geplant, dass die erste Linse und/oder die zweite Linse plankonvex ausgebildet ist.

Es wird darauf hingewiesen, dass die erste Linse auch als Sendelinse fungiert und somit bezeichnet werden kann. Ferner wird angemerkt, dass die zweite Linse als Empfangslinse bezeichenbar ist und/oder derart fungiert.

Weiterbildend ist es bevorzugt vorgesehen, dass der Radarsensor einen Blindbereich kleiner als 300mm, bevorzugt kleiner als 200mm, besonders bevorzugt kleiner 100mm, ganz besonders bevorzugt kleiner als 80mm, umfasst.

Zudem wird im Rahmen der vorliegenden Erfindung auch Schutz beansprucht für ein Fahrzeug oder ein Anbaugerät für ein Fahrzeug, bevorzugt ein landwirtschaftliches Nutzfahrzeug oder ein Anbaugerät für ein landwirtschaftliches Nutzfahrzeug, besonders bevorzugt einen Traktor oder ein Anbaugerät für einen Traktor, ganz besonders bevorzugt ein Mähdrescher oder ein Anbaugerät für einen Mähdrescher, ganz besonders besonders bevorzugt ein Feldhäcksler oder ein Anbaugerät für einen Feldhäcksler, umfassend einen erfindungsgemäßen Radarsensor, wobei der Radarsensor entweder in einer ersten Montagevariante oder in einer zweiten Montagevariante am Fahrzeug angeordnet ist.

Bei der ersten Montagevariante ist der erfindungsgemäße Radarsensor am Fahrzeug quer und/oder senkrecht zur Fahrtrichtung Fr angeordnet, derart, dass die Breitenerstreckung der ersten und/oder zweiten Richtcharakteristik der Radarstrahlung in Richtung und/oder entlang der Fahrtrichtung ausgerichtet ist.

Bei der zweiten Montagevariante ist der erfindungsgemäße Radarsensor am Fahrzeug längs und/oder parallel zur Fahrtrichtung Fr angeordnet, derart, dass die Längenerstreckung Ly der ersten und/oder zweiten Richtcharakteristik der Radarstrahlung in Richtung und/oder entlang der Fahrtrichtung Fr ausgerichtet ist.

Vorteilhaft kann somit der Abstand zwischen Fahrzeug und Untergrund optimal gemessen werden, wobei durch die Wahl der ersten Montagevariante oder der zweiten Montagevariante eine Anpassung in Bezug auf die Abstandsmessung zum Untergrund erfolgen kann. Vorteilhaft kann somit der Einfluss von Störobjekten, die nicht erfasst werden sollen, optimiert werden.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des erfindungsgemäßen Erzeugnisses durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen, in:
- Fig. 1a-d:: unterschiedliche schematische Darstellungen eines erfindungsgemäßen Radarsensors gemäß einer ersten beispielhaften Ausführungsvariante, in
- Fig. 2a/b:: eine schematische Seitenansicht der ersten und der zweiten Linse in Richtung der Längserstreckung sowie in Richtung der Breitenerstreckung, in
- Fig. 3:: ein schematisches Funktionsdiagramm des aus den Figuren 1a-d bekannten Radarsensors gemäß der ersten beispielhaften Ausführungsvariante, in
- Fig. 4a-d:: schematische Darstellungen in Draufsicht des erfindungsgemäßen Radarsensors gemäß bevorzugter Ausführungsvarianten sowie in
- Fig. 5a/b:: eine stark schematisierte Draufsicht auf ein Fahrzeug, das einen erfindungsgemäßen Radarsensor gemäß einer ersten oder einer zweiten Montagevariante umfasst.

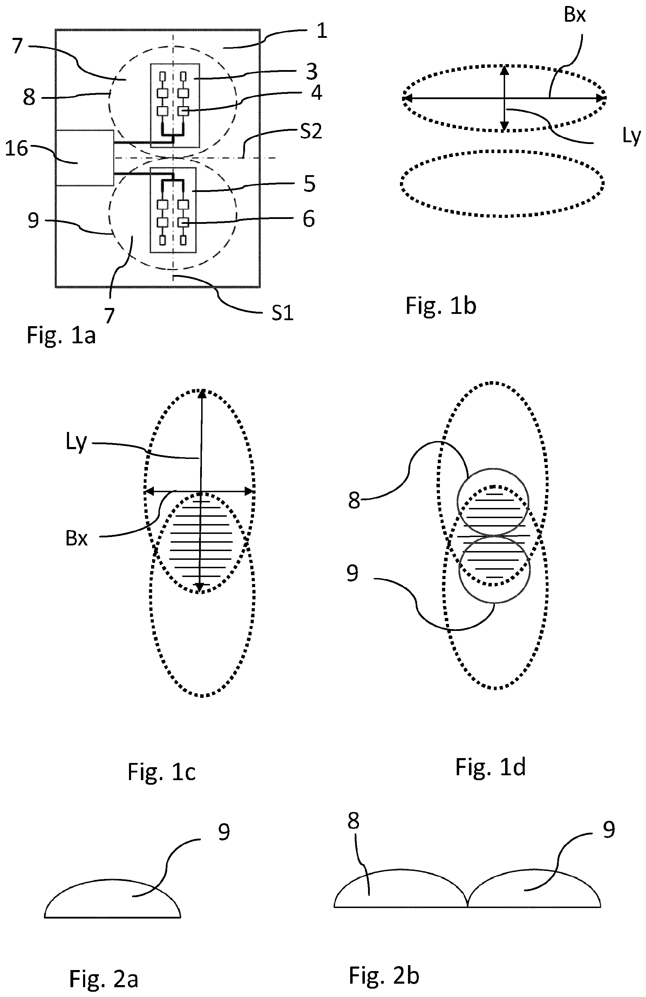

Die **Fig. 1a** zeigt einen erfindungsgemäßen Radarsensoren 1 gemäß einer ersten beispielhaften Ausführungsvariante in einer schematisierten Darstellung in Draufsicht.

Der erfindungsgemäße Radarsensor 1 umfasst ein Sendemodul 3, das eine senderseitige Patch-Array-Antenne 4 mit einer ersten Richtcharakteristik aufweist. Das Sendemodul 3 ist zum Senden von Radarstrahlung mit der ersten Richtcharakteristik ausgebildet, wobei darauf hingewiesen wird, dass Radarstrahlung mit der ersten Richtcharakteristik in einer Schnittebene, die entlang der Ausbreitungsrichtung der Radarstrahlung von dem Sendemodul 3 beabstandet ist, eine Längenerstreckung Ly und eine hierzu orthogonal verlaufende Breitenerstreckung Bx umfasst, wobei die Längenerstreckung Ly kleiner als die Breitenerstreckung Bx ist (vergleiche hierzu **Fig. 1b**).

Zudem umfasst der erfindungsgemäße Radarsensor 1 ein Empfangsmodul 5, das eine empfangsseitige Patch-Array-Antenne 6 mit einer ersten Richtcharakteristik aufweist. Das Empfangsmodul 5 ist zum Empfangen von reflektierter Radarstrahlung mit der ersten Richtcharakteristik ausgebildet und/oder optimiert.

Das Sendemodul 3 und das Empfangsmodul 5 sind in einer gemeinsamen Ebene angeordnet und oder elektrisch mit Ansteuer- und/oder Auswertemitteln 16 verschalten.

In der Draufsicht oberhalb des Sendemoduls 3 und des Empfangsmoduls 5 sind Linsenmittel 7 positioniert, die im Strahlengang der ausgesendeten und empfangenen Radarstrahlung angeordnet sind.

Die Linsenmittel 7 werden im Rahmen der vorliegenden Erfindung durch eine erste Linse 8 für die ausgesendete Radarstrahlung und eine zweite Linse 9 für die reflektierte Radarstrahlung ausgebildet, die vorliegend durch gestrichelte Kreise zum Darstellen der Außenkontur der ersten und zweiten Linsen 8/9 dargestellt sind.

Die erste Linse 8 und die zweite Linse 9 sind auch in einer gemeinsamen Ebene positioniert, die im vorliegenden Ausführungsbeispiel oberhalb und parallel zur Bildebene ausgerichtet ist.

Zudem ist es erfindungsgemäß vorgesehen, dass die erste Linse 8 und die zweite Linse 9 in Draufsicht in Richtung der Längenerstreckung Ly zueinander im Wesentlichen unmittelbar benachbart sind.

Anders ausgedrückt, die erste Linse 8 ist hinsichtlich einer zweiten Spiegelachse S2 spiegelsymmetrisch zu der zweiten Linse 9 positioniert, wobei die zweite Spiegelachse S2 in Richtung der Breitenerstreckung Bx der erzeugbaren Radarstrahlung ausgerichtet ist und tangential zur Außenkontur der ersten Linse 8 sowie tangential zur Außenkontur der zweiten Linse 9 verläuft.

Nochmal anders ausgedrückt, die erste Linse 8 ist spiegelsymmetrisch zur ersten Spiegelachse S1 ausgebildet und die zweite Linse 9 ist spiegelsymmetrisch zur ersten Spiegelachse S1 ausgebildet.

Die erste Linse 8 ist so eingerichtet und/oder ausgebildet, dass beim Auftreffen von Radarstrahlung mit der ersten Richtcharakteristik das Verhältnis zwischen der Längenerstreckung Ly und der Breitenerstreckung Bx so verändert wird, dass die Radarstrahlung mit der ersten Richtcharakteristik, die eine Längenerstreckung Ly aufweist, die kleiner als die Breitenerstreckung Bx ist, in Radarstrahlung mit der zweiten Richtcharakteristik umwandelbar ist, wobei die Radarstrahlung mit der zweiten Richtcharakteristik eine Längenerstreckung Ly aufweist, die größer als die Breitenerstreckung Bx ausfällt.

Die zweite Linse 9 ist so eingerichtet und/oder ausgebildet, dass beim Auftreffen von Radarstrahlung mit der zweiten Richtcharakteristik das Verhältnis zwischen der Längenerstreckung Ly und der Breitenerstreckung Bx so verändert wird, dass die Radarstrahlung mit der zweiten Richtcharakteristik, die eine Längenerstreckung Ly aufweist, die größer als die Breitenerstreckung Bx ist, in Radarstrahlung mit der ersten Richtcharakteristik umwandelbar ist, wobei Radarstrahlung mit der ersten Richtcharakteristik eine Längenerstreckung Ly aufweist, die kleiner als die Breitenerstreckung Bx ist.

Die **Fig. 1b** zeigt stark schematisiert die Ausgestaltung der erzeugten und reflektierten Radarstrahlung jeweils mit der ersten Richtcharakteristik in einer ersten Schnittebene.

Die erste Schnittebene verläuft in dem Bereich zwischen Sende- und Empfangsmodul 3, 5 einerseits und der ersten und zweiten Linse 8, 9 andererseits. Die Schnittebene ist zudem quer zur Ausbreitungsrichtung der Radarstrahlung ausgerichtet.

Innerhalb der ersten Schnittebene umfasst die Radarstrahlung mit der ersten Richtcharakteristik eine ungleichmäßige und/oder unsymmetrische und/oder ovale Ausgestaltung, wobei die Längenerstreckung Ly kleiner als die Breitenerstreckung Bx ausfällt.

Zudem sind zum einen das Sende- und das Empfangsmoduls 3, 5 in Richtung der Längenerstreckung Ly zueinander unmittelbar benachbart positioniert und zum anderen die erste und die zweite Linse 8, 9 in Richtung der Längenerstreckung zueinander unmittelbar benachbart positioniert.

Die **Fig. 1c** zeigt in einer ähnlichen stark schematisierten Darstellung die erzeugte und reflektierte Radarstrahlung mit der zweiten Richtcharakteristik in einer gemeinsamen zweiten Schnittebene.

Die zweite Schnittebene verläuft in dem Bereich zwischen der ersten und zweiten Linse 8, 9 einerseits und einem zu erfassenden Objekt andererseits. Die Schnittebene ist zudem quer zur Ausbreitungsrichtung der Radarstrahlung ausgerichtet.

Innerhalb der zweiten Schnittebene umfasst die Radarstrahlung mit der zweiten Richtcharakteristik eine ungleichmäßige und/oder unsymmetrische und/oder ovale Ausgestaltung, wobei die Längenerstreckung Ly größer als die Breitenerstreckung Bx ausfällt.

Durch die erste und die zweite Linse 8, 9 konnte somit die Richtcharakteristik der Radarstrahlung so verändert werden, dass Radarstrahlung mit einer großen Breitenerstreckung und einer kleinen Längenerstreckung in Radarstrahlung mit einer kleinen Breitenerstreckung und einer großen Längenerstreckung und umgekehrt umwandelbar ist.

Vorteilhaft kann somit durch die vorliegende Erfindung ein Radarsensor 1 bereitgestellt werden, der zum einen wenig Übersprechen durch die innenseitige Reflektion der erzeugten Radarstrahlung auf das Empfangsmodul 5 umfasst und zum anderen aufgrund der großen Längenerstreckung Ly und der entsprechenden Relativpositionierung von Sende- und Empfangsmodul 5, 7 einen breiten überlappenden Bereich aufweist und im Ergebnis einen kleinen Blindbereich umfasst (vergleiche hierzu den schraffierten Bereich in der **Fig. 1c**).

Die **Fig. 1d** zeigt eine weitere stark schematisierte Darstellung, wobei im Gegensatz zur aus der **Fig. 1c** bekannten Darstellung nun noch zusätzlich die Außenkonturen der entlang der Längsrichtung Ly unmittelbar benachbarten ersten und zweite Linse 8, 9 dargestellt ist.

Die **Fig. 2a** zeigt die erfindungsgemäße erste und zweite Linse 8, 9 in einer Schnittansicht in Richtung der Längenerstreckung Ly, wobei die zweite Linse 9 vollständig hinter der ersten Linse 8 verdeckt ist.

Vorliegend sind die erste Linse 8 und die zweite Linse 9 identisch ausgebildet, umfassen also jeweils eine plankonvexe Ausgestaltung und den gleichen Durchmesser von beispielsweise 300mm.

Die **Fig. 2b** zeigt die erste und die zweite Linse 8/9 in einer Schnittansicht in Richtung der Breitenerstreckung By. Aus dieser Ansicht geht hervor, dass die erste Linse 8 und die zweite Linse 9 in Richtung der Längenerstreckung Ly unmittelbar benachbart sind, jedoch keinen überlappenden und/oder gemeinsamen Randbereich umfassen.

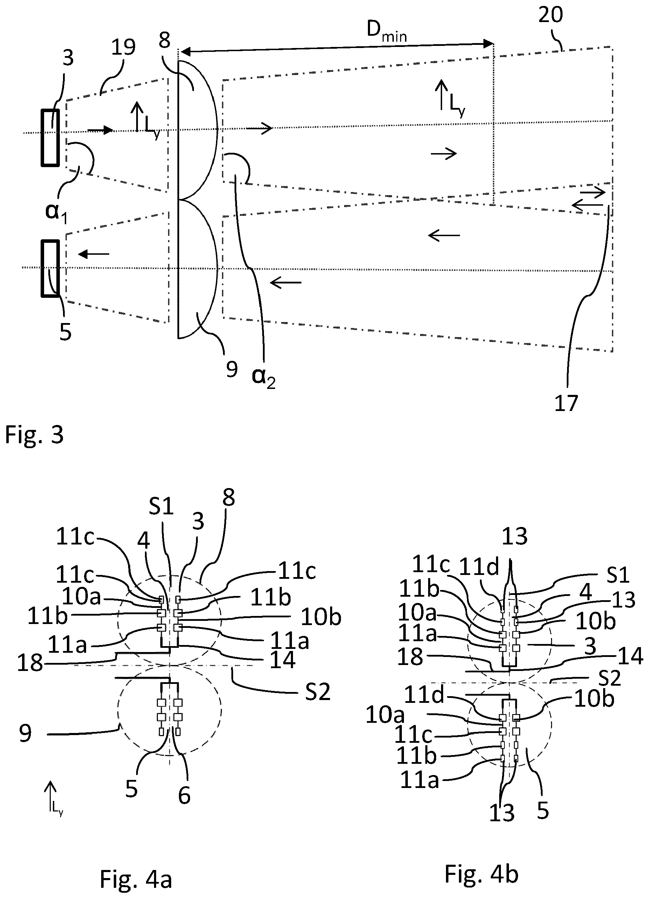

Die **Fig. 3** zeigt eine weitere schematisierte Darstellung in einer Seitenansicht, um die erfindungsgemäße Funktionalität des erfindungsgemäßen Radarsensors 1 weiter zu erläutern.

Die Darstellung zeigt zunächst das Sendemodul 3, das zum Senden der Radarstrahlung mit der ersten Richtcharakteristik ausgebildet ist. Die Ausbreitungsrichtung der Radarstrahlung mit der ersten Richtcharakteristik wird in der Fig. 3 über erste Pfeile symbolisch dargestellt.

Ferner ist die mit zurückgelegtem Weg sich aufweitende Längenerstreckung Ly der Radarstrahlung mit der ersten Richtcharakteristik über ein erstes gleichschenkliges Trapez 19 und die aufweitende Längenerstreckung Ly der Radarstrahlung mit der zweiten Richtcharakteristik durch ein zweites gleichschenkliges Trapez 20 schematisch dargestellt.

Die Darstellung zeigt zudem, dass sich die ausgesendete und reflektierte Radarstrahlung mit der zweiten Richtcharakteristik in einem mittleren Bereich überlagert, wobei durch diesen Bereich der Erfassungsbereich 17 der Sensoreinheit 1 ausgebildet wird.

Ferner geht aus der Darstellung hervor, dass der Ausbreitungswinkel α₁ vor der ersten Linse 8 größer ist als der Ausbreitungswinkel α₂ nach der ersten Linse 8. Anders ausgedrückt, die senderseitige Patch-Array-Antenne 4 sendet die Radarstrahlung unter einem größeren Ausbreitungswinkel α₁ aus als der Strahlengang, der durch die erste Linse 8 erzeugt wird und den Ausbreitungswinkel α₂ aufweist.

Die **Fig. 4a****-d** zeigen den konkreten Aufbau des Sende- und des Empfangsmoduls 3, 5 einerseits und der ersten und der zweiten Linse 8, 9 andererseits des erfindungsgemäßen Radarsensors 1 für verschiedene beispielshafte Ausführungsformen in Draufsicht.

Es wird darauf hingewiesen, dass die senderseitige Patch-Array-Antenne 4 und die empfangsseitige Patch-Array-Antenne 6 bei allen erfindungsgemäßen Ausführungsvarianten jeweils wenigstens zwei Zweige 10a-d mit jeweils wenigstens drei, seriell verschalteten Patches 11a-d umfassen.

Ferner wird darauf hingewiesen, dass in Draufsicht die wenigstens zwei Zweige 10a-d der jeweiligen Patch-Array-Antenne 4, 6 parallel und/oder zueinander spiegelsymmetrisch hinsichtlich einer ersten Spiegelachse S1 ausgerichtet sind, wobei diese erste Spiegelachse S1 in Draufsicht entlang der Längenerstreckung Ly verläuft.

Ferner wird angemerkt, dass das Sendemodul 3 und das Empfangsmodul 5 in allen Ausführungsvarianten so relativ zueinander angeordnet sind, dass die wenigstens zwei Zweige 10a-d des Sendemoduls 3 zu den wenigstens zwei Zweigen 10a-d des Empfangsmoduls 5 in Draufsicht spiegelsymmetrisch zu einer in Richtung der Breitenerstreckung Bx verlaufenden zweiten Spiegelachse S2 ausgerichtet sind.

Zudem wird angemerkt, dass die erste Spiegelachse S1 und die zweite Spiegelachse S2 zueinander rechtwinklig ausgerichtet sind.

Die bevorzugte Ausführungsform gemäß der **Fig. 4a** ist aus der Ausführungsvariante gemäß der **Fig. 1** bereits bekannt.

Das Sendemodul 3 umfasst eine Patch-Array-Antenne 4 mit zwei Zweigen 10a/b, wobei jeder Zweig 10a/b jeweils drei seriell verschaltete Patches 11a-c umfasst.

Die beiden Zweige 10a/b stehen über einen symmetrischen Leistungsteiler 14 mit einem gemeinsamen Leistungspfad 18 in Wirkverbindung.

Das letzte Patch 11c am freien Ende des jeweiligen Zweigs 10a/b ist als ein getaperter Patch 13 ausgebildet. Dies wirkt sich vorteilhaft auf die Ausgestaltung der ersten Richtcharakteristik des erfindungsgemäßen Radarsensors 1 aus.

Zudem geht aus der Darstellung hervor, dass der erste Zweig 10a und der zweite Zweig 10b parallel verlaufen. Ferner ist der zweite Zweig 10b in Bezug auf die erste Spiegelachse S1 spiegelsymmetrisch ausgebildet, wobei diese erste Spiegelachse S1 in Draufsicht in Richtung der Längenerstreckung Ly verläuft.

Zudem ist die äußere Kontur der ersten Linse 8 durch einen gestrichelten Kreis angedeutet.

Die erste Linse 8 ist in Richtung der Längenerstreckung Ly unmittelbar zu der zweiten Linse 9 positioniert, die mit dem Empfangsmodul 5 zusammenwirkt. Mit anderen Worten, die erste und die zweite Linse sind spiegelsymmetrisch zu einer zweiten Spiegelachse angeordnet.

Zudem ist das Empfangsmodul 5 identisch zum Sendemodul 3 ausgebildet und so ausgerichtet, dass der erste und der zweite Zweig 10a/b des Empfangsmodul 5 hinsichtlich der zweiten Spiegelachse S2 spiegelsymmetrisch zum ersten und zweiten Zweig 10a/b des Sendemoduls 3 ausgerichtet sind.

Die bevorzugte Ausführungsform gemäß der **Fig. 4b** umfasst auch ein Sendemodul 3 mit einer erfindungsgemäßen Patch-Array-Antenne 4 mit einem ersten Zweig 10a und einem zweiten Zweig 10b.

Der erste Zweig 10a umfasst vier Patches 11a-d, die jeweils in Reihe verschalten sind.

Die letzten beiden Patches 11c, 11d, die das freie Ende des Zweigs 10a bilden, sind jeweils als getaperte Patches 13 ausgebildet.

Der zweite Zweig 10b ist identisch und spiegelsymmetrisch zum ersten Zweig 10a ausgebildet, wobei die erste Spiegelachse S1 in Richtung der Längenerstreckung Ly verläuft.

Der erste und der zweite Zweig 10a/b werden über einen Leistungsteiler 14, der an einem ersten Ende des ersten und des zweiten Zweigs 10a/b ausgebildet ist, zu gleichen Anteilen mit elektrischer Energie aus einem einzelnen Leitungspfad 18 versorgt.

Das Empfangsmodul 5 ist identisch und bezüglich der zweiten Spiegelachse S2 spiegelsymmetrisch zum Sendemodul 3 ausgebildet, wobei die zweite Spiegelachse S2 in Richtung der Breitenerstreckung Bx verläuft.

Das Empfangsmodul 5 umfasst somit auch zwei Zweige 10a/b mit jeweils vier Patches 11a-d, wobei die beiden Zweige 10a/b hinsichtlich der ersten Spiegelachse S1 zueinander spiegelsymmetrisch ausgebildet sind.

Auch die erste Linse 8 und die zweite Linse 9 sind jeweils hinsichtlich der ersten Spiegelachse S1 spiegelsymmetrisch ausgebildet und/oder ausgerichtet. Ferner ist die erste Linse 8 hinsichtlich der zweiten Spiegelachse S2 spiegelsymmetrisch zur zweiten Linse 9 ausgebildet und/oder ausgerichtet und/oder umgekehrt.

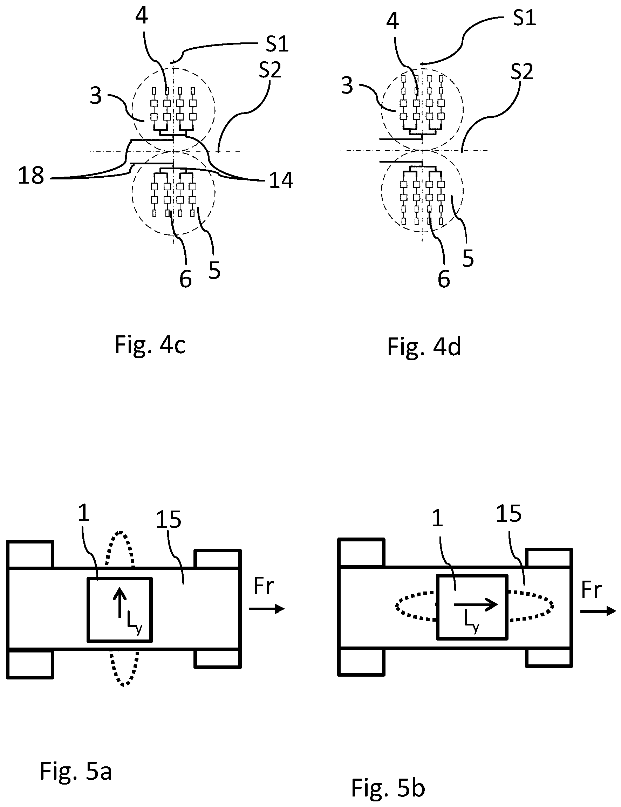

In Bezug auf die bevorzugten Ausführungsformen der **Fig. 4c** und **Fig. 4d** werden im Folgenden nur die Unterschiede hinsichtlich der Ausführungsvariante der Fig. 4a bzw. Fig 4b erläutert. Sämtliche Beschreibungen gelten somit auch für die folgenden Ausführungsbeispiele.

Das Sende- und Empfangsmodul 3/5 im Ausführungsbeispiel gemäß der **Fig. 4c** umfasst jeweils vier Zweige 10a-d mit jeweils drei Patches 10a-d.

Das freie Ende der Zweige 10a-d wird durch ein getapertes Patch 13 gebildet, wobei jeder Zweig 10a-d nur ein einziges getapertes Patch 13 umfasst. Eingangsseitig werden die einzelnen Zweige 10a-d über einen symmetrischen Leistungsteiler 14 mit dem gemeinsamen Leistungspfad 18 verbunden, wobei eine zweistufige Aufteilung mit jeweils einer Leitungsverdopplung und Leistungshalbierung realisiert ist.

Das Sende- und Empfangsmodul 3/5 gemäß des Ausführungsbeispiels der **Fig. 4d** umfasst auch jeweils vier Zweige 10a-d mit jeweils vier Patches 10a-d. Jeder Zweig 10a-d umfasst zwei getaperte Patches 13, die die letzten beiden Patches im jeweiligen Zweig 10a-d ausbilden.

Die Figuren 5a und 5b zeigen eine stark schematisierte Darstellung eines Fahrzeugs 15, das einen erfindungsgemäßen Radarsensor 1 umfasst.

Das Fahrzeug 15, das vorliegend als Traktor ausgebildet ist, bewegt sich entlang der Fahrtrichtung Fr vorzugsweise mit konstanter Geschwindigkeit.

In der **Fig. 5a** ist der erfindungsgemäße Radarsensor 1 gemäß einer ersten Montagevariante am Fahrzeug 15 quer zur Fahrtrichtung Fr angeordnet.

Vorteilhaft ist somit die Breitenerstreckung Bx der ersten bzw. zweiten Richtcharakteristik in Richtung der Fahrtrichtung Fr ausgerichtet. Anders ausgedrückt, die Längenerstreckung Ly der ersten und/oder zweiten Richtcharakteristik ist quer oder rechtwinklig zur Fahrtrichtung Fr ausgerichtet, um somit den negativen Einfluss von Anbauteilen des Traktors, die vom erfindungsgemäßen Radarsensoren 1 als Störobjekte erkannt werden, zu minimieren.

In der **Fig. 5b** ist die erfindungsgemäße Sensoreinheit 1 gemäß einer zweiten Montagevariante an dem Fahrzeug 15 festgelegt, wobei bei dieser zweiten Montagevariante die Längenerstreckung der Radarstrahlung mit der ersten bzw. zweiten Richtcharakteristik in Richtung der Fahrtrichtung Fr ausgerichtet ist.

Die Wahl der Montagevariante ermöglicht, dass abstehende Metallteile, beispielsweise von einem Anbaugerät, nicht in den Erfassungsbereich des erfindungsgemäßen Radarsensors 1 ragen, was sich sonst aufgrund einer Wechselwirkung negativ auf die Abstandsbestimmung mittels dem erfindungsgemäßen Radarsensoren 1 auswirkt.

Im Ergebnis ermöglicht die vorliegende Erfindung durch ein geschicktes Zusammenwirken der wesentlichen Komponenten auf überraschend einfache Weise den Erfassungsbereich von gattungsbildenden Radarsensoren so zu optimieren, dass sich ein Radarsensor mit einem im Vergleich zu den aus dem Stand der Technik bekannten Radarsensoren kleinen Blindbereich realisieren lässt.

## Patentansprüche

1. Radarsensor (1), insbesondere Nahbereichsradarsensor, zur Abstandsbestimmung von Objekten in einem Erfassungsbereich (2), umfassend ein Sendemodul (3), das eine senderseitige Patch-Array-Antenne (4) mit einer ersten Richtcharakteristik aufweist, zum Senden von Radarstrahlung mit der ersten Richtcharakteristik,
ein Empfangsmodul (5), das eine empfangsseitige Patch-Array-Antenne (6) mit einer ersten Richtcharakteristik aufweist, zum Empfangen der im Erfassungsbereich reflektierten Radarstrahlung,
sowie Linsenmittel (7), die im Strahlengang der ausgesendeten und empfangenen Radarstrahlung gegenüberliegend zum Sendemodul (3) und Empfangsmodul (5) angeordnet sind,
wobei die senderseitige und die empfangsseitige Patch-Array-Antenne (4, 5) so ausgebildet sind, dass die jeweilige erste Richtcharakteristik in einer quer zur Ausbreitungsrichtung der ausgesendeten oder reflektierten Radarstrahlung verlaufenden Schnittebene eine Längenerstreckung (Ly) und eine hierzu orthogonal verlaufende Breitenerstreckung (Bx) umfasst, wobei die Längenerstreckung (Ly) kleiner als die Breitenerstreckung (Bx) ist, um insbesondere das Übersprechen der ausgesendeten Radarstrahlung auf das Empfangsmodul (5) zu minimieren,
wobei die senderseitige und die empfangsseitige Patch-Array-Antenne (4, 5) in Richtung der Längenerstreckung (Ly) zueinander benachbart positioniert sind,
dass die Linsenmittel (7) durch eine erste Linse (8) für die ausgesendete Radarstrahlung und eine in Draufsicht in Richtung der Längenerstreckung (Ly) im Wesentlichen unmittelbar benachbarte zweite Linse (9) für die reflektierte Radarstrahlung ausgebildet sind,
**dadurch gekennzeichnet,**
**dass** die erste Linse (8) so ausgebildet ist, dass das Verhältnis zwischen der Längenerstreckung (Ly) und der Breitenerstreckung (Bx) der ersten Richtcharakteristik der Radarstrahlung beeinflussbar ist, derart, dass die Radarstrahlung mit der ersten Richtcharakteristik und somit mit der Längenerstreckung (Ly), die kleiner als die Breitenerstreckung (Bx) ist, in Radarstrahlung mit einer zweiten Richtcharakteristik und somit mit einer Längenerstreckung (Ly), die größer als die Breitenerstreckung (Bx) ausfällt und wobei die zweite Linse (9) so ausgebildet ist, dass das Verhältnis zwischen der Längenerstreckung (Ly) und der Breitenerstreckung (Bx) der zweiten Richtcharakteristik der Radarstrahlung beeinflussbar ist, derart, dass die Radarstrahlung mit der zweiten Richtcharakteristik und somit mit der Längenerstreckung (Ly), die größer als die Breitenerstreckung (Bx) ist, in Radarstrahlung mit der ersten Richtcharakteristik und somit mit einer Längenerstreckung (Ly), die kleiner als die Breitenerstreckung (Bx) ausfällt, umformbar ist,
und **dass** die senderseitige Patch-Array-Antenne (4) und/oder die empfangsseitige Patch-Array-Antenne (6) jeweils wenigstens zwei Zweige (10a-d) mit jeweils wenigstens drei, seriell verschalteten Patches (11a-c) umfasst, wobei in Draufsicht die wenigstens zwei Zweige (10a-d) der jeweiligen Patch-Array-Antenne (4, 6) parallel und spiegelsymmetrisch entlang einer ersten Spiegelachse (S1) ausgerichtet sind, die in Draufsicht in Richtung der Längenerstreckung (Ly) verläuft.

2. Radarsensor nach Anspruch 1,
**dadurch gekennzeichnet,**
**dass** das Sendemodul (3) und das Empfangsmodul (5) so relativ zueinander angeordnet sind, dass die wenigstens zwei Zweige (10a-d) des Sendemoduls (3) zu den wenigstens zwei Zweigen (10a-d) des Empfangsmoduls (5) in Draufsicht spiegelsymmetrisch zu einer in Richtung der Breitenerstreckung (Bx) verlaufenden zweiten Spiegelachse (S2) ausgerichtet sind, wobei die erste Spiegelachse (S1) und die zweite Spiegelachse (S2) zueinander orthogonal verlaufen.

3. Radarsensor nach Anspruch 1 oder 2,
**dadurch gekennzeichnet,**
**dass** die Anzahl der Patches (11a-d) eines der wenigstens zwei Zweige (10a-d) des Sendemoduls (3) und/oder des Empfangsmoduls (5) die Anzahl der Zweige (10a-d) der jeweiligen Patch-Array-Antenne (4, 6) um wenigstens 1 übersteigt, um die Radarstrahlung mit der ersten Richtcharakteristik zu erzeugen.

4. Radarsensor nach Anspruch 1 bis 3,
**dadurch gekennzeichnet,**
**dass** die Anzahl der Patches (11a-c) pro Zweig (10a-d) des Sende- und/oder Empfangsmoduls (3, 5) ungerade und/oder die Anzahl der Zweige (10a-d) pro Sende- und/oder Empfangsmodul (3, 5) gerade gewählt ist.

5. Radarsensor nach einem der Ansprüche 1 bis 4,
**dadurch gekennzeichnet,**
**dass** die wenigstens zwei Zweige (10a-d) des Sende- und/oder Empfangsmoduls (3, 5) jeweils als ein Series-Fed Array (12) ausgebildet sind.

6. Radarsensor nach einem der Ansprüche 1 bis 5,
**dadurch gekennzeichnet,**
**dass** die wenigstens zwei Zweige (10a-d) jeweils endseitig wenigstens ein, bevorzugt genau ein, getapertes Patch (13) umfassen, um den Ausleuchtungswinkel, insbesondere die Abstrahlungsform hinsichtlich der Längenerstreckung (Ly) zu verringern.

7. Radarsensor nach Anspruch 6,
**dadurch gekennzeichnet,**
**dass** das getaperte Patch (13) in Bezug auf ein ungetapertes Patch (11a-c) in Draufsicht in Richtung der Breitenerstreckung (Bx) eine Patchbreite von weniger als 90%, bevorzugt weniger als 80%, besonders bevorzugt weniger als 70%, ganz besonders bevorzugt weniger als 60%, umfasst.

8. Radarsensor nach einem der Ansprüche 1 bis 7,
**dadurch gekennzeichnet,**
**dass** das Sendemodul (3), insbesondere das Sende- und das Empfangsmodul, einen Leistungsteiler (14) umfasst, wobei der Leistungsteiler (14) symmetrisch ausgebildet ist, derart, dass die Leistung zwischen den einzelnen Zweigen (10a-d) des Sendemoduls (3), insbesondere des Sende- und des Empfangsmodul, gleichmäßig aufteilbar ist.

9. Radarsensor nach einem der Ansprüche 1 bis 8,
**dadurch gekennzeichnet,**
**dass** die erste und/oder zweite Linse (8, 9) einen Durchmesser von weniger als 60mm, bevorzugt weniger als 40mm, besonders bevorzugt weniger als 30mm, ganz besonders bevorzugt weniger als 22mm aufweist und/oder dass die erste und/oder zweite Linse (8, 9) aus einem dielektrischen Material besteht und/oder dass die erste und/oder zweite Linse (8, 9) plankonvex ausgebildet ist.

10. Radarsensor nach einem der Ansprüche 1 bis 9,
**dadurch gekennzeichnet,**
**dass** der Radarsensor (1) einen Blindbereich kleiner als 300mm, bevorzugt kleiner als 200mm, besonders bevorzugt kleiner 100mm, ganz besonders bevorzugt kleiner als 80mm, umfasst.

11. Fahrzeug (15), umfassend einen Radarsensor (1) nach einem der vorgenannten Ansprüche, wobei der Radarsensor in einer ersten Montagevariante am Fahrzeug (15) quer zur Fahrtrichtung (Fr) angeordnet ist, um die Breitenerstreckung (Bx) der Richtcharakteristik in Richtung der Fahrtrichtung (Fr) auszurichten oder in einer zweiten Montagevariante längs zur Fahrtrichtung (Fr) angeordnet ist, um die Längenerstreckung (Ly) der Richtcharakteristik in Richtung der Fahrtrichtung (Fr) auszurichten.

## Claims

1. Radar sensor (1), in particular short-range radar sensor, for determining the distance of objects in a detection area (2), comprising
a transmitter module (3), which comprises a transmitter-side patch array antenna (4) with a first directivity, for transmitting radar signals with the first directivity, a receiver module (5) which comprises a receiver-side patch array antenna (6) with a first directivity, for receiving the radar signals reflected in the detection area (2),
and lens means (7) arranged in the beam path of the transmitted and received radar signals opposite to the transmitter module (3) and the receiver module (5), that the transmitter-side patch array antenna (4) and the receiver-side patch array antenna (6) are designed in such a manner that the respective first directivity comprises, in a sectional plane running vertical with respect to the propagation direction of the transmitted or reflected radar signals, a length extension (Ly) and a width extension (Bx) running orthogonally thereto whereas the length extension (Ly) is smaller than the width extension (Bx), in particular in order to minimize the crosstalk of the transmitted radar signals on the receiver module (5), wherein the transmitter-side and receiver-side patch array antennas (4, 5) are positioned adjacent to one another in the direction of the length extension (Ly),
that the lens means (7) are designed by a first lens (8) for the transmitted radar signals and a second lens (9) for the reflected radar signals, whereas the second lens (9) is substantially directly adjacent in the direction of the length extension (Ly) in a top view, **characterized in**
**that** the first lens (8) is designed in such a manner that the ratio between the length extension (Ly) and the width extension (Bx) of the first directivity of the radar signals is influenceable in such a manner that the radar signals with the first directivity and thus with the length extension (Ly), which is smaller than the width extension (Bx), is convertible into radar signals with a second directivity and thus with a length extension (Ly), which is larger than the width extension (Bx), and that the second lens (9) is designed in such a manner that the ratio between the length extension (Ly) and the width extension (Bx) of the second directivity of the radar signals is influenceable in such a manner that the radar signals with the second directivity and thus with the length extension (Ly), which is larger than the width extension (Bx), is convertible into radar signals with the second directivity and thus with a length extension (Ly), which is smaller than the width extension (Bx),
and **that** the transmitter-side patch array antenna (4) and/or the receiver-side patch array antenna (6) each comprises at least two branches (10a-d) with in each case at least three serially connected patches (11a-d), wherein, in top view, the at least two branches (10a-d) of the respective patch array antenna (4, 6) are aligned parallel and mirror-symmetrically along a first mirror axis (S1) which, in top view, runs in the direction of the length extension (Ly).

2. Radar sensor according to claim 1,
**characterized in**
**in that** the transmitter module (3) and the receiver module (5) are arranged relative to one another in such a manner that in top view the at least two branches (10a-d) of the transmitter module (3) are aligned mirror-symmetrically with respect to the at least two branches (10a-d) of the receiver module (5) with respect to a second mirror axis (S2) running in the direction of the width extension (Bx), whereas the first mirror axis (S1) and the second mirror axis (S2) extend orthogonally with respect to each other.

3. Radar sensor according to claim 1 or 2,
**characterized in**
**that** the number of patches (11a-d) of one of the at least two branches (10a-d) of the transmitter module (3) and/or of the receiver module (5) is greater than the number of branches (10a-d) of the respective patch array antenna (4, 6) by at least 1 in order to emit the radar signals with the first directivity.

4. Radar sensor according to claim 1 to 3,
**characterized in**
**that** the number of patches (11a-d) per branch (10a-d) of the transmitter module (3) and/or receiver module (5) is odd and/or the number of branches (10a-d) for each transmitter module (3) and/or receiver module (5) is selected to be even.

5. Radar sensor according to any one of claims 1 to 4,
**characterized in**
**that** the at least two branches (10a-d) of the transmitter module (3) and/or receiver module (5) are each designed as a series-fed array (12).

6. Radar sensor according to one of claims 1 to 5,
**characterized in**
**that** the at least two branches (10a-d) each comprise at the end at least one, preferably exactly one, tapered patch (13) in order to reduce the beam angle, in particular the radiation pattern with respect to the length extension (Ly).

7. Radar sensor according to claim 6,
**characterized in**
**in that** the tapered patch (13), with respect to an untampered and/or normal patch (11a-d) in top view, comprises a patch width in the direction of the width extension (Bx) of less than 90%, preferably less than 80%, particularly preferably less than 70%, very particularly preferably less than 60%.

8. Radar sensor according to any one of claims 1 to 7,
**characterized in**
**in that** the transmitter module (3), in particular the transmitter module and the receiver module, comprises a power divider (14), whereas the power divider (14) being designed symmetrically in such a manner that the output is divided uniformly between the individual branches (10a-d) of the transmitter module (3), in particular of the transmitter module and the receiver module.

9. Radar sensor according to any one of claims 1 to 8,
**characterized in**
**that** the first and/or the second lens (8, 9) has a diameter of less than 60mm, preferably less than 40mm, particularly preferably less than 30mm, very particularly preferably less than 22mm and/or in that the first and/or second lens (8, 9) comprises a dielectric material and/or in that the first and/or second lens (8, 9) is of a planoconvex design

10. Radar sensor according to one of the claims 1 to 9,
**characterized in**
**that** the radar sensor (1) comprises a blind area smaller than 300mm, preferably smaller than 200mm, particularly preferably smaller than 100mm, most preferably smaller than 80mm.

11. Vehicle (15) comprising a radar sensor (1) according to one of the above mentioned claims, wherein the radar sensor (1) in a first mounting option is arranged on the vehicle (15) transversely to the direction of motion (Fr) in order to align the width extension (Bx) of the directivity in the direction of the direction of motion (Fr) or in a second mounting option is arranged longitudinally to the direction of motion (Fr) in order to align the length extension (Ly) of the directivity in the direction of the direction of motion (Fr).

## Revendications

1. Capteur radar (1), en particulier capteur radar à courte portée, permettant de déterminer la distance par rapport à des objets dans une zone de détection (2), comprenant un module d'émission (3) qui présente une antenne plaques-réseau côté émission (4) comportant une première caractéristique directionnelle, pour l'émission d'un rayonnement radar avec la première caractéristique directionnelle,
un module de réception (5) qui présente une antenne plaques-réseau côté réception (6) comportant une première caractéristique directionnelle, pour la réception du rayonnement radar réfléchi dans la zone de détection,
ainsi que des moyens formant lentilles (7) qui sont disposés sur le trajet de rayonnement du rayonnement radar émis et reçu en faisant face au module d'émission (3) et au module de réception (5),
dans lequel les antennes plaques-réseau côté émission et côté réception (4, 5) sont conçues de telle sorte que la première caractéristique directionnelle respective comprend, dans un plan de coupe s'étendant transversalement à la direction de propagation du rayonnement radar émis ou réfléchi, une extension en longueur (Ly) et une extension en largeur (Bx) s'étendant orthogonalement à celle-ci, dans lequel l'extension en longueur (Ly) est inférieure à l'extension en largeur (Bx), en particulier pour minimiser la diaphonie du rayonnement radar émis sur le module de réception (5),
dans lequel les antennes plaques-réseau côté émission et côté réception (4, 5) sont positionnées de manière à être adjacentes l'une à l'autre dans la direction de l'extension en longueur (Ly),
que les moyens formant lentilles (7) sont formés par une première lentille (8) pour le rayonnement radar émis et par une seconde lentille (9) pour le rayonnement radar réfléchi sensiblement directement voisine en vue de dessus dans la direction de l'extension en longueur (Ly),
**caractérisé en ce**
**que** la première lentille (8) est conçue de sorte que le rapport entre l'extension en longueur (Ly) et l'extension en largeur (Bx) de la première caractéristique directionnelle du rayonnement radar peut être influencé de telle sorte que le rayonnement radar avec la première caractéristique directionnelle et donc avec l'extension en longueur (Ly) plus petite que l'extension en largeur (Bx) peut être transformé en un rayonnement radar avec une seconde caractéristique directionnelle et donc avec une extension en longueur (Ly) plus grande que l'extension en largeur (Bx), et dans lequel la seconde lentille (9) est conçue de sorte que le rapport entre l'extension en longueur (Ly) et l'extension en largeur (Bx) de la seconde caractéristique directionnelle du rayonnement radar peut être influencé de telle sorte que le rayonnement radar avec la seconde caractéristique directionnelle et donc avec l'extension en longueur (Ly) plus grande que l'extension en largeur (Bx) peut être transformé en un rayonnement radar avec la première caractéristique directionnelle et donc avec une extension en longueur (Ly) plus petite que l'extension en largeur (Bx),
et **que** l'antenne plaques-réseau côté émission (4) et/ou l'antenne plaques-réseau côté réception (6) comprennent respectivement au moins deux branches (10a-d) comportant respectivement au moins trois plaques (11a-c) montées en série, dans lequel les au moins deux branches (10a-d) de l'antenne plaques-réseau (4, 6) respective sont orientées, en vue de dessus, parallèlement et symétriquement en miroir le long d'un premier axe de miroir (S1) qui s'étend, en vue de dessus, dans la direction de l'extension en longueur (Ly).

2. Capteur radar selon la revendication 1,
**caractérisé en ce**
**que** le module d'émission (3) et le module de réception (5) sont disposés l'un par rapport à l'autre de telle sorte que les au moins deux branches (10a-d) du module d'émission (3) sont orientées par rapport aux au moins deux branches (10a-d) du module de réception (5), en vue de dessus, symétriquement en miroir par rapport à un second axe de miroir (S2) s'étendant dans la direction de l'extension en largeur (Bx), dans lequel le premier axe de miroir (S1) et le second axe de miroir (S2) s'étendent orthogonalement l'un à l'autre.

3. Capteur radar selon la revendication 1 ou 2,
**caractérisé en ce**
**que** le nombre de plaques (11a-d) de l'une des au moins deux branches (10a-d) du module d'émission (3) et/ou du module de réception (5) dépasse d'au moins 1 le nombre de branches (10a-d) de l'antenne plaques-réseau (4, 6) respective afin de générer le rayonnement radar avec la première caractéristique directionnelle.

4. Capteur radar selon les revendications 1 à 3,
**caractérisé en ce**
**que** le nombre de plaques (11a-c) par branche (10a-d) du module d'émission et/ou de réception (3, 5) est choisi de manière à être impair et/ou le nombre de branches (10a-d) par module d'émission et/ou de réception (3, 5) est choisi de manière à être pair.

5. Capteur radar selon l'une des revendications 1 à 4,
**caractérisé en ce**
**que** les au moins deux branches (10a-d) du module d'émission et/ou du module de réception (3, 5) sont respectivement réalisées sous la forme d'un réseau alimenté en série (12).

6. Capteur radar selon l'une des revendications 1 à 5,
**caractérisé en ce**
**que** les au moins deux branches (10a-d) comprennent respectivement, à une extrémité, au moins une, de préférence exactement une, plaque effilée (13) afin de réduire l'angle d'émission, en particulier la forme de rayonnement par rapport à l'extension en longueur (Ly).

7. Capteur radar selon la revendication 6,
**caractérisé en ce**
**que** la plaque effilée (13) comprend, par rapport à une plaque non effilée (11a-c), en vue de dessus dans la direction de l'extension en largeur (Bx), une largeur de plaque inférieure à 90 %, de préférence inférieure à 80 %, de manière particulièrement préférée inférieure à 70 %, de manière tout particulièrement préférée inférieure à 60 %.

8. Capteur radar selon l'une des revendications 1 à 7,
**caractérisé en ce**
**que** le module d'émission (3), en particulier le module d'émission et le module de réception, comprennent un diviseur de puissance (14), dans lequel le diviseur de puissance (14) est conçu de manière symétrique, de telle sorte que la puissance peut être répartie de manière uniforme entre les différentes branches (10a-d) du module d'émission (3), en particulier du module d'émission et du module de réception.

9. Capteur radar selon l'une des revendications 1 à 8,
**caractérisé en ce**
**que** la première et/ou la seconde lentille (8, 9) présentent un diamètre inférieur à 60 mm, de préférence inférieur à 40 mm, de manière particulièrement préférée inférieur à 30 mm, de manière tout particulièrement préférée inférieur à 22 mm, et/ou que la première et/ou la seconde lentille (8, 9) sont constituées d'un matériau diélectrique et/ou que la première et/ou la seconde lentille (8, 9) sont réalisées de manière à être plan-convexes.

10. Capteur radar selon l'une des revendications 1 à 9,
**caractérisé en ce**
**que** le capteur radar (1) comprend une zone aveugle inférieure à 300 mm, de préférence inférieure à 200 mm, de manière particulièrement préférée inférieure à 100 mm, de manière tout particulièrement préférée inférieure à 80 mm.

11. Véhicule (15), comprenant un capteur radar (1) selon l'une des revendications précédentes, dans lequel le capteur radar est disposé, dans une première variante de montage, sur le véhicule (15) transversalement à la direction de conduite (Fr) pour orienter l'extension en largeur (Bx) de la caractéristique directionnelle dans la direction de la direction de conduite (Fr) ou est disposé, dans une seconde variante de montage, longitudinalement à la direction de conduite (Fr) pour orienter l'extension en longueur (Ly) de la caractéristique directionnelle dans la direction de la direction de conduite (Fr).
